Europäisches Patentamt

European Patent Office

Office européen des brevets

(11) Numéro de publication: **0 083 530**
**A1**

## (12) DEMANDE DE BREVET EUROPEEN

(21) Numéro de dépôt: **82402361.8**

(22) Date de dépôt: **22.12.82**

(51) Int. Cl.³: **G 21 C 19/32**

(30) Priorité: **31.12.81 FR 8124624**

(43) Date de publication de la demande: **13.07.83**
**Bulletin 83/28**

(84) Etats contractants désignés: **BE CH DE GB IT LI NL SE**

(71) Demandeur: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Bernard, Jean, Le Chant de l'Epine
l'Aumarière, F-44220 Coueron (FR)**
Inventeur: **Moulin, Maurice, 9, rue Théodore de Banville,
F-91120 Palaiseau (FR)**
Inventeur: **Vivien, Jean, 22, rue Tristan Bernard,
F-78340 Les Clayes Sous Bois (FR)**

(74) Mandataire: **Mongrédien, André et al, c/o
BREVATOME 25, rue de Ponthieu, F-75008 Paris (FR)**

(54) **Procédé et installation pour le transfert de matières dangereuses et/ou radioactives.**

(57) Les matières à transférer sont introduites dans un emballage (4) disposé horizontalement sur un bâti (48), puis ce bâti,
supporté par des coussins fluides, est transporté le long d'une
aire de manutention (50) jusque sur le plateau (51) du véhicule
(52), le plateau (51) étant maintenu au même niveau que l'aire
de manutention (50).
Application à la manutention de combustibles nucléaires
irradiés ou de produits radioactifs nécessitant des protections
lourdes et encombrantes.

EP 0 083 530 A1

La présente invention, a pour objet un procédé et une installation pour le transfert de matières dangereuses et/ou radioactives, et plus particulièrement de combustibles nucléaires irradiés.

A leur sortie du réacteur, les assemblages irradiés sont évacués soit directement vers une usine de retraitement, soit vers un lieu de stockage provisoire en attendant leur transfert à l'usine de retraitement. Le transport s'effectue dans des châteaux ou emballages blindés ayant la forme générale d'un cylindre de grande longueur présentant une ouverture à l'une de ses extrémités et comportant une protection contre les rayonnements, ce qui les rend lourds et encombrants.

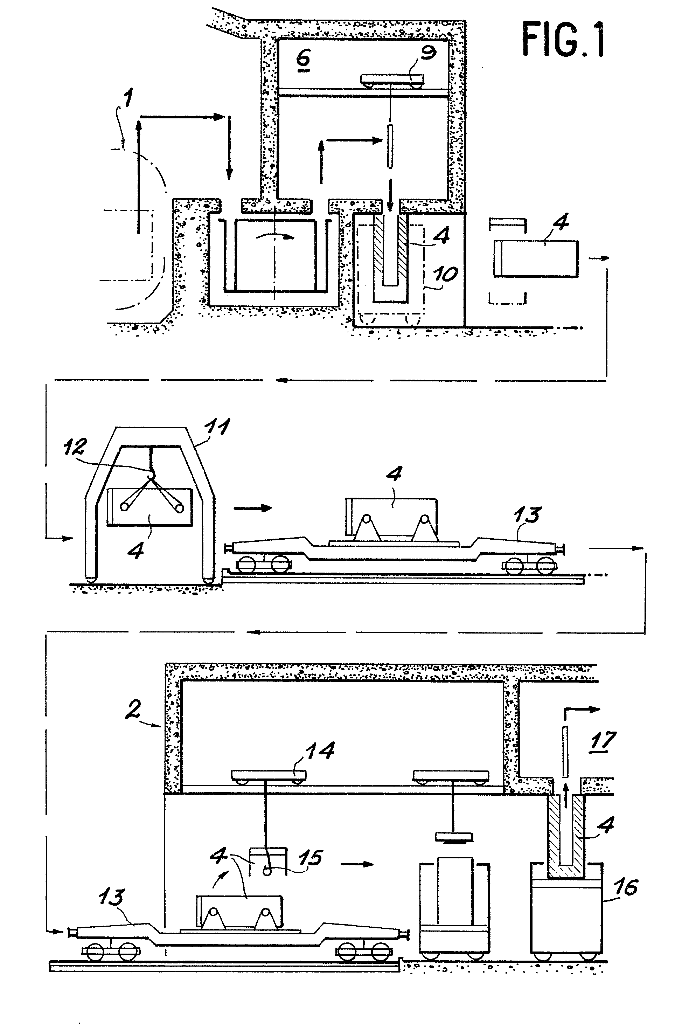

La figure 1 illustre la méthode actuellement utilisée pour le transfert de tels emballages entre le réacteur 1 et une installation de réception 2.

Sur la figure, on voit que l'emballage 4 est accosté par son ouverture supérieure contre la paroi inférieure d'un local dit "cellule de chargement" 6 à l'aide d'un ascenseur à emballage (non représenté). Une unité de levage 9 placée à l'intérieur de la cellule 6 sert à introduire les assemblages à l'intérieur du château 4 qui se trouve en position verticale. Une fois le chargement terminé, l'emballage est fermé à l'aide d'un obturateur interne manoeuvré depuis l'intérieur de la cellule 6. L'emballage est ensuite placé, à l'aide de l'ascenseur, sur un chariot basculeur 10 où l'on met en place son obturateur externe. Le château est ensuite basculé en position horizontale et le chariot 10 l'amène sous un pont roulant 11 équipé d'un palonnier 12 permettant de soulever l'emballage. On reti-

B 7382.3 JR

0083530

re le chariot 10, et on amène à sa place un wagon 13 sur lequel l'emballage est déposé, toujours horizontalement, en vue de son transfert jusqu'à une installation de réception 2. L'emballage est alors accroché à un pont roulant 14 par l'intermédiaire d'un palonnier 15, ce qui permet de le remettre en position verticale par levage. Il est ensuite déposé sur un chariot transbordeur-élévateur 16 et on lui retire son obturateur externe avant de l'amener en face de l'ouverture d'une cellule de déchargement 17. On retire l'obturateur interne et les assemblages sont extraits un par un.

On voit que l'ensemble de ces opérations exige de nombreuses reprises de charge et donc des appareils de manutention nombreux et encombrants, en particulier des ponts roulants de forte puissance et à course d'élévation importante. Il faut donc prévoir des bâtiments de grande hauteur et de forte résistance, calculés pour résister aux séismes, ce qui les rend très onéreux. De plus, cette suite d'opérations est assez longue à réaliser, ce qui entraîne des pertes de temps.

La présente invention a pour but d'éviter ces inconvénients grâce à un procédé et une installation de transfert de matières dangereuses et/ou radioactives qui facilitent le déplacement des emballages de transport et rendent inutiles tous les appareils de manutention utilisés dans l'art antérieur.

Selon la principale caractéristique du procédé objet de l'invention, on introduit lesdites matières dans un récipient pesant et on utilise pour les déplacer sur le sol d'une cellule de réception et sur celui d'une aire de manutention ainsi que sur un plateau porté par un véhicule de transport, des moyens de sustentation pour maintenir ledit récipient à un niveau constant sur une surface plane pendant la durée des transferts.

Ce procédé peut être utilisé pour transférer des produits nécessitant des emballages de poids important depuis une installation de départ ou d'arrivée jusqu'à un véhicule de transport et inversement. Il peut aussi être utilisé pour déplacer des matières dangereuses contenues dans un récipient pesant à l'intérieur d'une enceinte blindée entre différents postes tels qu'un poste de remplissage, un poste de stockage et un poste d'extraction, que cette enceinte soit remplie d'air ou d'un gaz neutre.

Dans le cas de transfert entre une installation de départ ou d'arrivée et un véhicule, on charge les produits à transférer à l'intérieur d'un récipient ou emballage, ce dernier ayant une position déterminée dans l'espace et étant muni d'une surface inférieure plane, on soulève l'emballage grâce auxdits moyens de sustentation, et on le déplace sur une aire de manutention horizontale s'étendant depuis le voisinage du lieu de chargement jusqu'au point de stationnement d'un véhicule, celui-ci ayant un plateau situé sensiblement au même niveau que l'aire de manutention, l'assiette dudit emballage restant constante pendant toute la durée du transfert.

Suivant les cas l'emballage peut comporter lui-même une face inférieure plane, ou être posé sur un bâti ayant une surface inférieure plane, et équipée de moyens de sustentation.

Il est ainsi très facile de déplacer l'emballage sur l'aire de manutention sans recourir à tout l'appareillage qui était nécessaire avec les méthodes de l'art antérieur. De plus, l'emballage gardant toujours la même assiette au cours du transfert, on gagne du temps en supprimant toutes les

B 7382.3 JR

étapes où l'on modifiait sa position et on supprime les risques de chute lors des manutentions et en cas de séismes.

L'invention a également pour objet une installation pour la mise en oeuvre de ce procédé. Dans le cas de transfert entre une installation de départ ou d'arrivée et un véhicule, le dispositif objet de l'invention comprend :

- une aire de manutention horizontale s'étendant depuis le lieu de chargement de l'emballage jusqu'au point de stationnement du véhicule et
- des moyens permettant d'amener le plateau du véhicule au même niveau que l'aire de manutention.

Pour le transfert à l'intérieur d'une cellule blindée, l'installation comprend à l'intérieur de la cellule :

- au moins un récipient ou matrice de transfert,
- une machine de chargement équipée de moyens lui permettant de se déplacer à l'intérieur de la cellule et de moyens aptes à manoeuvrer ladite matrice,
- un chariot porte-opercule, équipé de moyens permettant de le déplacer à l'intérieur de la cellule et apte à manoeuvrer un opercule destiné à obturer de manière étanche un orifice percé dans une paroi séparant la cellule de l'extérieur.

L'installation peut comporter également :

- au moins un alvéole de stockage communiquant avec la cellule par un orifice pouvant être obturé par un bouchon, et
- un chariot porte-bouchon, équipé de moyens permettant de le déplacer à l'intérieur de la cellule, et de moyens permettant de manoeuvrer ledit bouchon.

Selon une autre caractéristique importante de l'invention, l'emballage de transport est supporté par des coussins fluides, de même que la ma-

B 7382.3 JR

chine de chargement, le chariot porte-opercule et le chariot porte-bouchon.

L'invention apparaîtra mieux à la lecture de la description qui va suivre, donnée à titre purement illustratif et nullement limitatif, en référence aux dessins annexés, dans lesquels :

- la figure 1, déjà décrite, illustre un procédé de transfert d'assemblages combustibles irradiés selon l'art antérieur,

- la figure 2 est une vue schématique dont la partie gauche est une vue en élévation illustrant le transfert d'assemblages irradiés du coeur du réacteur jusqu'au dispositif selon l'invention et la partie droite est une vue de dessus schématique et partiellement en coupe de ce même dispositif,

- la figure 3 est une vue agrandie suivant la ligne III-III de la figure 2,

- la figure 4 est une vue suivant la ligne IV-IV de la figure 3,

- la figure 4a est une vue agrandie, semblable à la figure 3, montrant une extrémité de la pelle portée par la machine de chargement,

- la figure 5 est une vue schématique en coupe suivant la ligne V-V de la figure 2 illustrant le cas où le véhicule de transport est un wagon de chemin de fer,

- la figure 6 est une vue agrandie en coupe, semblable à la figure 3, montrant le système de verrouillage de l'obturateur interne de l'emballage sur l'opercule fermant l'orifice percé dans la paroi de la cellule de réception,

- la figure 7 est une vue suivant la ligne VII-VII de la figure 6, et

- la figure 8 est une vue semblable à la figure 5 dans le cas où le véhicule de transport est une barge.

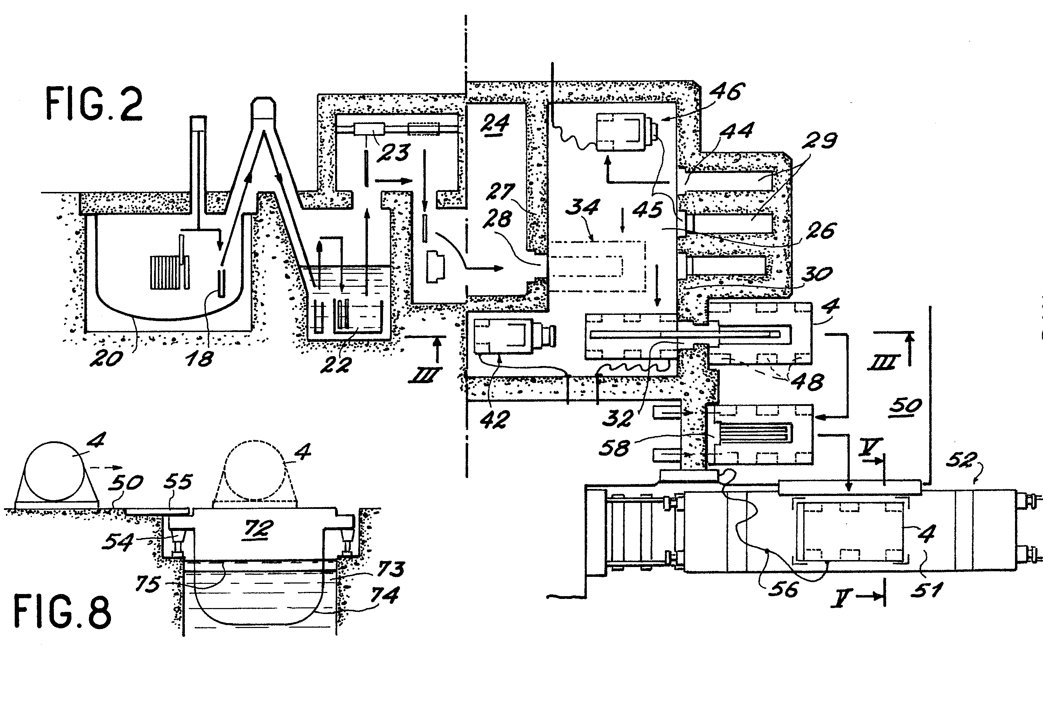

Si l'on se reporte à la figure 2, on voit

B 7382.3 JR

que celle-ci se compose de deux parties : la partie gauche est une vue en coupe verticale montrant comment les assemblages irradiés 18 sont transportés verticalement depuis la cuve 20 du réacteur dans une piscine de stockage 22 et de là, grâce à un appareil de manutention 23, dans un local dit "cellule de préparation" 24. Celle-ci apparaît sur la partie droite de la figure, qui est une vue schématique en plan de l'ensemble du dispositif objet de l'invention.

On voit que la cellule de préparation 24 est séparée d'une cellule blindée dite "cellule de réception" 26 par une paroi 27 percée d'une ouverture 28. La cellule de réception 26 est elle-même séparée de l'extérieur par une paroi 30 percée d'un orifice 32. Une machine de chargement 34, supportée par des coussins fluides, peut se déplacer à l'intérieur de la cellule de réception 26. Son rôle est de transporter les matrices de chargement, qui sont des récipients de forme cylindrique équipés d'alvéoles dans lesquels sont disposés les assemblages à transférer. Ce sont ces matrices qui sont introduites dans l'emballage de transport.

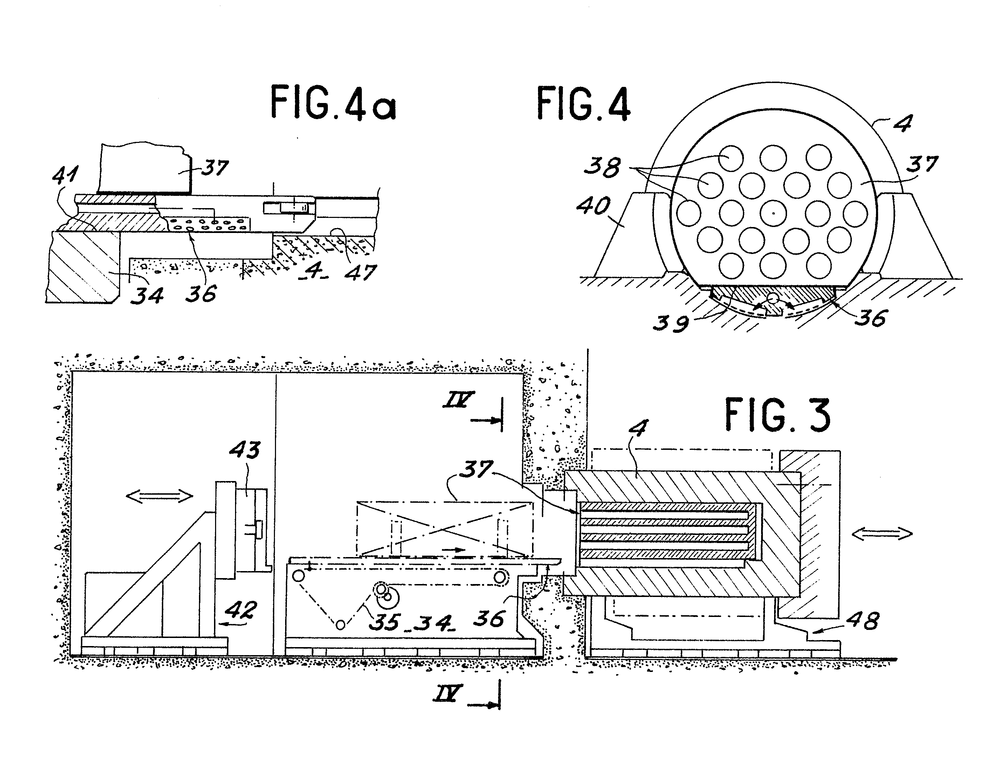

La machine de chargement 34 apparaît mieux sur la vue en coupe de la figure 3. On voit qu'elle comporte à sa partie supérieure un plateau ou pelle 36, mobile à l'aide d'une chaîne 35, servant à supporter la matrice 37 et à introduire celle-ci dans l'emballage 4.

La figure 4 montre la matrice 37, munie d'alvéoles 38, disposée à l'intérieur de l'emballage 4. On voit que la matrice 37 porte un méplat 39 afin de ménager à la partie inférieure de l'emballage un espace permettant l'introduction de la pelle 36. Des joues de guidage 40 portées par la machine 34 facilitent l'introduction de la matrice 37 dans l'emballage.

B 7382.3 JR

0083530

La figure 4a montre l'extrémité de la pelle 36 portant la matrice 37 lorsqu'elle pénètre dans l'emballage 4. On voit que les coussins fluides dont elle est équipée lui permettent de prendre appui soit sur la surface supérieure 41 de la machine 34, soit sur une partie 47 de la paroi interne de l'emballage 4.

Si l'on se reporte à nouveau aux figures 2 et 3, on voit à l'intérieur de la cellule 26 un chariot 42, dit "porte-opercule", lui-même mobile sur coussin fluide. Il sert à manoeuvrer l'opercule 43 qui ferme de manière étanche l'orifice 32 lorsque l'emballage 4 n'est pas en cours de chargement ou de déchargement.

On voit également sur la figure 2 que le dispositif comporte des alvéoles de stockage 29, communiquant avec la cellule 26 par des orifices 44 pouvant être fermés par des bouchons 45. Un chariot porte-bouchon 46, supporté par coussins fluides et mobile à l'intérieur de la cellule 26, permet de retirer et de mettre en place les bouchons 45. Le rôle de ces alvéoles est de permettre un stockage provisoire des matrices pleines ou vides si cela s'avérait nécessaire au cours de l'opération de transfert.

Les alvéoles sont équipés de circuits de ventilation (non représentés) permettant d'évacuer la puissance résiduelle des produits radioactifs durant le stockage.

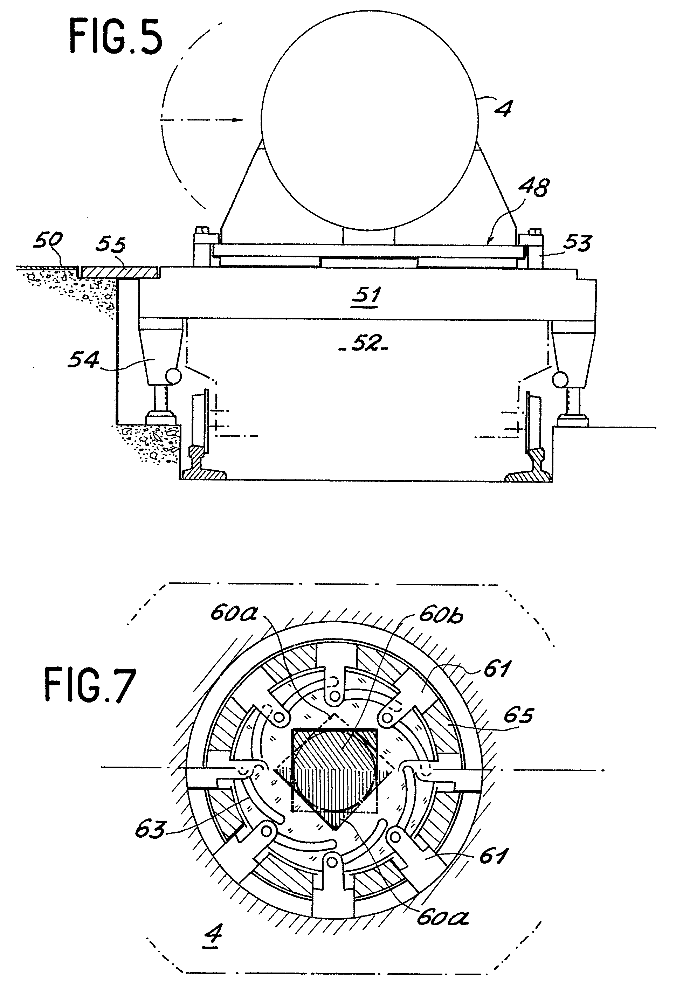

L'emballage 4 est lui-même disposé sur un bâti 48 supporté par des coussins fluides (figure 3). Ce bâti peut être déplacé sur une aire de manutention 50 (figure 2) jusqu'à un véhicule de transport 52 qui, dans l'exemple représenté ici de manière non limitative, est un wagon de chemin de

B 7382.3 JR

0083530

fer. Celui-ci apparaît mieux sur la vue en coupe de la figure 5. On voit qu'il est équipé d'un plateau horizontal 51 sur lequel est fixé, au moyen de brides 53, le bâti 48 supportant l'emballage 4. Comme le bâti est transporté sur coussin d'air jusque sur le plateau 51, il est nécessaire de prévoir des moyens (par exemple des vérins mécaniques ou hydrauliques 54) pour amener celui-ci au même niveau que l'aire de manutention. On utilise une plaque amovible 55 pour réaliser la jonction entre le plateau 51 et l'aire de manutention 50.

On va maintenant décrire un exemple de cycle de transfert dans le cas où l'emballage amène une matrice vide, qui sera stockée dans l'un des alvéoles 29, et repart avec une matrice qui a été chargée antérieurement et stockée dans un autre alvéole.

Pour réaliser ce chargement préliminaire, une matrice vide, portée par la machine de chargement 34 est amenée en face de l'ouverture 28 (figure 2). Les assemblages sont introduits dans les alvéoles de la matrice à l'aide d'un dispositif de manutention contenu dans la cellule de préparation 24, puis la machine 34 est déplacée jusqu'à ce qu'elle se trouve en face d'un alvéole vide et pénètre partiellement dans l'orifice de l'alvéole jusqu'à être en contact. La pelle 36 est mise en mouvement afin d'introduire la matrice dans l'alvéole, puis la machine 34 est retirée et le chariot 46 vient mettre en place le bouchon 45 servant à obturer l'alvéole. La pelle 36 est équipée d'un dispositif de sustentation par coussins fluides, ce qui permet de la soulever pendant son mouvement relatif par rapport à la machine 34.

Au début du cycle de transfert, le wagon

0083530

52, qui amène un emballage contenant une matrice vide, est arrêté à son point de stationnement au bord de l'aire de manutention 50. Les vérins 54 (figure 5) sont mis en mouvement afin d'amener le plateau 51 du wagon au même niveau que l'aire de manutention. La plaque 55 est mise en place pour réaliser la jonction entre l'aire 50 et le plateau 51. On déverrouille les brides d'immobilisation 53, puis une tuyauterie souple 56 (figure 2) est branchée à une prise de pression afin d'alimenter le bâti 48 en air comprimé (on peut aussi utiliser un compresseur embarqué à bord d'un chariot automoteur). L'ensemble de l'emballage et de son bâti support est alors déplacé jusqu'à un poste de préparation 58, situé sur l'aire de manutention 50, où l'on retire l'amortisseur avant de l'emballage ainsi que son obturateur externe. Les "amortisseurs" sont des capots protecteurs placés aux deux extrémités de l'emballage afin de le protéger contre des chocs accidentels. Pour le chargement et le déchargement des matrices, il est nécessaire de retirer l'amortisseur avant alors que l'amortisseur arrière peut rester en place pendant toute la durée du cycle. Pendant le retrait de l'amortisseur avant, l'alimentation en air comprimé est coupée afin que le bâti 48 repose sur le sol. Cette alimentation est remise en route pour le déplacement de l'ensemble jusqu'à l'orifice 32, qui est fermé par l'opercule 43.

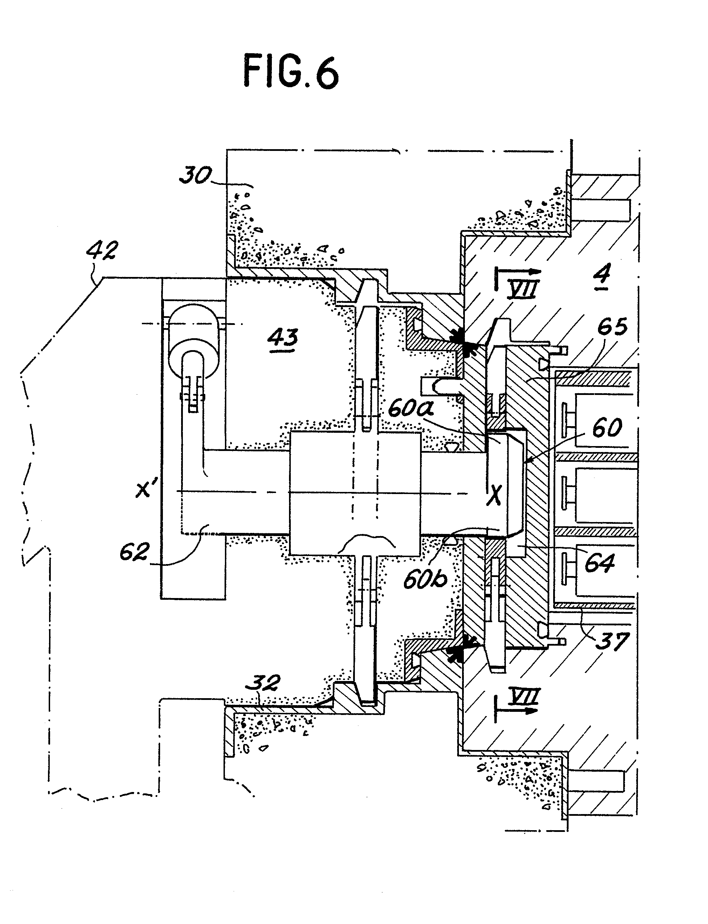

Le système de verrouillage de ce dernier apparaît sur la vue en coupe de la figure 6. On voit la paroi 30 de la cellule de réception 26 et l'opercule 43, porté par le chariot 42, qui ferme l'orifice 32. L'orifice 32 et l'opercule 43 ont une forme cylindrique et leur axe XX' est confondu avec celui de l'emballage 4. L'opercule 43 est équipé, du côté

B 7382.3 JR

extérieur, d'un doigt d'entraînement 60, manoeuvré à l'aide d'un mécanisme 62, et dont la forme lui permet de s'engager dans un logement 64, prévu sur la face extérieure de l'obturateur interne 65. Le doigt 60 a sensiblement la forme d'un carré : on l'a représenté en position de verrouillage (60a) au-dessus de l'axe XX' et en position de déverrouillage (60b) au-dessous. En position de verrouillage, l'une des diagonales du carré est placée verticalement et le doigt 60 ne peut être extrait car l'ouverture permettant de l'introduire dans le logement 64 est un carré de mêmes dimensions dont les côtés sont verticaux et horizontaux. Par rotation du doigt 60 à l'aide du mécanisme 62, on assure simultanément le déverrouillage de l'obturateur interne 65 par rapport à l'emballage 4, le verrouillage de cet obturateur sur l'opercule 43, et le déverrouillage de ce dernier par rapport à l'orifice 32.

La figure 7 montre le mécanisme permettant de fixer l'obturateur 65 sur l'emballage 4 : la moitié inférieure de la figure correspond à la position de verrouillage et la partie supérieure à la position de déverrouillage.

Le verrouillage est assuré à l'aide de doigts de verrouillage 61 manoeuvrés à l'aide de cames 63 dont les mouvements sont commandés par la rotation du doigt d'entraînement 60.

Le système de fermeture de l'opercule 43 et la solidarisation avec l'obturateur 65 sont du matériel du type "Double porte transfert étanche" commercialisé par la société La Calhène sous la dénomination DPTE. Son principal intérêt consiste à protéger les faces, ultérieurement accessibles, de la contamination radio-active pendant l'introduction de l'ensemble opercule-obturateur en cellule contaminée.

0083530

Le chariot 42, portant l'opercule 43 et l'obturateur 65, est ensuite déplacé et on amène la machine de chargement 34 en face de l'orifice 32 (figure 3). La pelle 36 est introduite dans l'espace ménagé entre l'emballage et la matrice à décharger. On met en route le circuit de sustentation de la pelle, ce qui a pour effet de soulever la matrice. Celle-ci est extraite de l'emballage et on ramène la pelle 36 sur la machine 34. Cette dernière est alors déplacée jusqu'à un alvéole vide dans lequel on introduit la matrice vide (les alvéoles de stockage des matrices vides n'ont pas besoin d'être obturés par un bouchon).

La machine porte-bouchon 46 est alors amenée en face de l'alvéole contenant la matrice pleine à expédier (figure 2). Le bouchon 45 est enlevé grâce à un mécanisme de verrouillage semblable à celui qui a été décrit en référence aux figures 6 et 7, puis on retire la machine porte-bouchon.

On amène la machine de chargement devant l'alvéole et on extrait la matrice par une suite d'opérations semblables à ce qui a été décrit plus haut. On ramène ensuite la machine 34 devant l'orifice 32 et on introduit la matrice dans l'emballage. On retire la machine de chargement et on amène le chariot porte-opercule 42 en face de l'orifice 32. Par rotation du doigt d'entraînement 60, l'opercule 43 et l'obturateur 65 sont remis en place et désolidarisés. La cellule est rendue étanche par l'opercule 43, l'emballage, par l'obturateur 65. L'emballage 4, toujours disposé horizontalement sur son bâti-support 48, est amené au poste de préparation 58 où on lui met son obturateur externe et son amortisseur avant. Il est ensuite transporté jusque sur le plateau 51 du wagon 52 sur lequel on fixe le bâti 48

0083530

après avoir arrêté son alimentation en air comprimé. Le wagon est ensuite expédié vers une installation de réception (retraitement ou stockage intermédiaire) où il peut être déchargé à l'aide d'un dispositif identique.

Le dispositif selon l'invention comporte un certain nombre d'appareils supportés par des coussins fluides. Cependant, l'alimentation de ceux-ci en air comprimé n'est ouverte que lorsqu'on les déplace : lorsqu'ils sont immobiles, pendant les étapes de chargement ou de déchargement, cette alimentation est coupée et ils reposent toujours sur le sol. Cette alimentation peut se faire par branchement sur un réseau d'air comprimé ou à l'aide d'un compresseur embarqué sur le véhicule en question ou sur un véhicule accompagnateur.

Le procédé et le dispositif selon l'invention présentent de nombreux avantages dont le principal est la facilité de manutention puisque l'emballage de transport est placé sur un bâti lui-même supporté par des coussins fluides : la force de quelques hommes suffit pour déplacer une masse de plusieurs tonnes sur coussin d'air, ce qui permet de supprimer tous les appareils encombrants qui étaient nécessaires avec les méthodes de l'art antérieur (ponts roulants, chariots basculeurs, palonniers, transbordeurs, élévateurs, etc...). Le déplacement latéral peut être effectué à l'aide d'un chariot automoteur léger, celui-ci pouvant être muni d'un compresseur d'air assurant la fourniture de l'air comprimé permettant la sustentation. Les appareils mobiles à l'intérieur de la cellule de réception peuvent être simples et légers, ce qui en diminue le coût. Le fluide utilisé sera avantageusement l'air ambiant à l'extérieur ou le gaz présent à l'intérieur de la cellule de réception.

B 7382.3 JR

13                    0083530

D'autre part, le fait que les matrices et emballages gardent toujours la même assiette et la suppression d'appareils tels que les ponts roulants permet de diminuer la hauteur des batiments, d'où une appréciable économie dans la construction de ceux-ci. Quant à l'aire de manutention, elle doit présenter un état de surface soigné, mais, comme la surface nécessaire est moindre qu'avec les solutions précédentes, on réalise encore une économie.

Enfin, sur le plan de la sécurité, on supprime les risques de chute d'objets lourds en cours de manutention ainsi que les risques de basculement puisque le centre de gravité des charges est abaissé. La durée de l'opération de transfert est réduite, ce qui diminue le temps pendant lequel le personnel est exposé aux radiations, et améliore la cadence de rotation des emballages.

Il est bien entendu que l'invention ne se limite pas au seul exemple de réalisation qui vient d'être décrit, mais qu'on peut envisager des variantes sans sortir pour autant du cadre de l'invention. Dans cet exemple, l'emballage 4 repose en position horizontale sur un bâti support 48, mais on peut très bien envisager de supprimer le bâti support, l'emballage comportant lui-même une surface plane permettant la sustentation par coussin d'air. Le véhicule de transport peut être quelconque à condition de présenter un plateau horizontal : plateforme routière, barge, etc... Pour le transfert entre deux cellules blindées peu éloignées l'une de l'autre il pourra être supprimé.

Dans le cas où le véhicule de transport est une barge 72 (figure 8), il est prévu un sas d'écluse 73 au bord de l'aire de manutention 50. La barge 72 et les parois du sas 73 ont une forme telle

B 7382.3 JR

14

que la barge puisse être soulevée par des vérins 54 comme le wagon 52 de la figure 5. Lorsque la barge est vide et en appui sur les vérins 54, l'eau contenue dans le sas 73 se trouve à un niveau inférieur 74. Après chargement, et afin que la barge puisse flotter librement après retrait des vérins 54, il est nécessaire de monter l'eau jusqu'à un niveau supérieur 75.

Enfin les applications ne se limitent pas à la seule manutention de combustibles nucléaires : au contraire, le procédé et le dispositif selon l'invention peuvent être utilisés pour le transport de toute matière dangereuse nécessitant une protection lourde telle que : source de cobalt 60, déchets radioactifs, effluents liquides, etc... et d'une manière générale à la manutention de tous objets nécessitant un emballage de poids important et devant répondre à des normes de sécurité très strictes pour les personnels et les populations.

## REVENDICATIONS

1. Procédé de transfert de matières dangereuses et/ou radioactives, caractérisé en ce que l'on introduit lesdites matières dans un récipient pesant (4, 37) et en ce que l'on utilise pour les déplacer sur le sol d'une cellule de réception (26) et sur celui d'une aire de manutention (50) ainsi que sur un plateau (51) porté par un véhicule de transport (52, 72), des moyens de sustentation pour maintenir ledit récipient à un niveau constant sur une surface plane pendant la durée des transferts.

2. Procédé selon la revendication 1, caractérisé en ce qu'on déplace des matières dangereuses et/ou radioactives contenues dans un récipient ou matrice (37) à l'intérieur d'une enceinte blindée (26) entre différents postes tels qu'un poste de remplissage, un poste de stockage (29) et un poste d'extraction.

3. Procédé selon la revendication 1, caractérisé en ce qu'on charge les produits à transférer à l'intérieur d'un récipient ou emballage (4), ce dernier ayant une position déterminée dans l'espace et étant muni d'une surface inférieure plane, on soulève l'emballage (4) grâce auxdits moyens de sustentation, et on le déplace sur une aire de manutention (50) s'étendant depuis le voisinage du lieu de chargement jusqu'au point de stationnement d'un véhicule (52), celui-ci ayant un plateau (51) situé au même niveau que l'aire de manutention (50), l'assiette dudit emballage (4) restant constante pendant toute la durée du transfert.

4. Installation pour la mise en oeuvre du procédé selon la revendication 3, caractérisée en ce

0083530

qu'elle comprend :

- une aire de manutention (50) s'étendant depuis le lieu de chargement de l'emballage (4) jusqu'au point de stationnement du véhicule (52) et

- des moyens permettant d'amener le plateau (51) du véhicule (52) au même niveau que l'aire de manutention (50).

5. Installation selon la revendication 4, caractérisée en ce que lesdits moyens permettant d'amener le plateau (51) au même niveau que l'aire de manutention (50) comprennent des vérins (54).

6. Installation selon l'une quelconque des revendications 4 et 5, caractérisée en ce qu'elle comprend un bâti (48) ayant une face inférieure plane et sur lequel peut être fixé l'emballage (4), ledit bâti (48) étant équipé de moyens permettant de le déplacer sur l'aire de manutention (50) et sur le plateau (51).

7. Installation selon la revendication 6, caractérisée en ce que lesdits moyens sont des coussins fluides.

8. Installation pour la mise en oeuvre du procédé selon la revendication 2, caractérisée en ce qu'elle comprend, à l'intérieur de la cellule blindée (26) :

- au moins un récipient ou matrice de transfert (37),

- une machine de chargement (34) équipée de moyens lui permettant de se déplacer à l'intérieur de la cellule (26) et de moyens aptes à manoeuvrer ladite matrice,

- un chariot porte-opercule (42), équipé de moyens permettant de le déplacer à l'intérieur de la cellule (26) et apte à manoeuvrer un opercule (43) destiné à obturer un orifice (32) percé dans une paroi (30) séparant la cellule (26) de l'extérieur.

B 7382.3 JR

0083530

9. Installation selon la revendication 8, caractérisée en ce que les moyens permettant de déplacer la machine de chargement (34) à l'intérieur de la cellule (26) sont des coussins fluides.

10. Installation selon l'une quelconque des revendications 8 et 9, caractérisé en ce que lesdits moyens équipant la machine de chargement (34) et permettant de manoeuvrer la matrice (37) comprennent un plateau ou pelle (36) sur laquelle on peut poser la matrice (37), ladite pelle (36) pouvant être soulevée grâce à des moyens de sustentation puis déplacée horizontalement une fois qu'elle a été soulevée.

11. Installation selon la revendication 10, caractérisée en ce que lesdits moyens de sustentation sont des coussins fluides.

12. Installation selon l'une quelconque des revendications 8 à 11, caractérisée en ce que les moyens permettant de déplacer le chariot porte-opercule (42) comprennent des coussins fluides.

13. Installation selon l'une quelconque des revendications 8 à 12, caractérisée en ce qu'elle comporte en outre :
- au moins un alvéole de stockage (29) communiquant avec la cellule (26) par un orifice (44) pouvant être obturé par un bouchon (45), et
- un chariot porte-bouchon (46), équipé de moyens permettant de le déplacer à l'intérieur de la cellule (26), et de moyens permettant de manoeuvrer lesdits bouchons (45).

14. Installation selon la revendication 13, caractérisée en ce que lesdits moyens permettant de déplacer le chariot porte-bouchon (46) sont des coussins fluides.

15 . Application du procédé selon l'une au

0083530

moins des revendications 1 à 3 et de l'installation selon l'une au moins des revendications 4 à 14 au transfert d'éléments combustibles.

B 7382.3 JR

1,5

FIG.1

008 530

2,5

FIG.2

FIG.8

FIG.4a

FIG.4

FIG.3

0083530

FIG.5

FIG.7

0083530

# FIG.6

Office européen
des brevets

**RAPPORT DE RECHERCHE EUROPEENNE**

Numéro de la demande

EP 82 40 2361

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-3 910 006 (JAMES)<br>* Colonne 4, lignes 2-31; colonne 5, lignes 4-45; figure 1 * | 1-7 | G 21 C 19/32 |
| A | US-A-4 069 923 (BLUMENAU et al.)<br>* Colonne 3, lignes 10-43; figure 1 * | 1 | |
| A | DE-A-2 253 232 (SIEMENS)<br>* Page 4, alinéa 2; figures 3,4 * | 1 | |
| A | FR-A-2 436 475 (KRAFTWERK UNION)<br>* Page 2, lignes 11-21; figure 1 * | 1,2 | |
| A | FR-A-2 260 169 (WESTINGHOUSE)<br>* Page 4, lignes 19-38; page 5, lignes 1-29; figures 1,2 * | 1-3 | DOMAINES TECHNIQUES RECHERCHES (Int. Cl. 3)<br><br>G 21 C 19/32<br>G 21 C 19/18 |

Le présent rapport de recherche a été établi pour toutes les revendications

| Lieu de la recherche<br>LA HAYE | Date d'achèvement de la recherche<br>30-03-1983 | Examinateur<br>GIANNI G.L.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03.82